# EUROPÄISCHE PATENTSCHRIFT

(11) **EP 1 609 770 B1**
(45) Veröffentlichungstag und Bekanntmachung des Hinweises auf die Patenterteilung: **27.03.2013**
(21) Anmeldenummer: 05013466.7
(22) Anmeldetag: 22.06.2005
(51) Int. Cl.: C04B 28/02, C04B 24/26

(54) **Hydraulisch abbindender Klebemörtel**
Hydraulic hardening adhesive mortar
Mortier adhesif à prise hydraulique

(30) Priorität: 22.06.2004 DE 102004030121
(43) Veröffentlichungstag der Anmeldung: 28.12.2005
(73) Patentinhaber: PCI Augsburg GmbH, 86159 Augsburg (DE)
(72) Erfinder: Bäurle, Ulrich, 86424 Anried (DE); Ehle, Alexander, 86916 Kaufering (DE); Eisenreich, Andreas, 71717 Beilstein (DE); Gäberlein, Peter, Dr., 4054 Basel (CH); Holland, Uwe, Dr., 8965 Berikon (CH); Müller, Paul, 86343 Königsbrunn (DE); Kratzer, Kornelia, 86637 Prettelshofen (DE); Schäpers, Yvonne, 86159 Augsburg (DE); Stohr, Werner, 86161 Augsburg (DE); Streicher, Markus, 86316 Friedberg (DE); Wache, Steffen, Dr., 83254 Breitbrunn (DE); Weiss, Patrick, 86199 Augsburg (DE)
(74) Vertreter: HOFFMANN EITLE

(56) Entgegenhaltungen:
- EP-A1- 0 417 418
- EP-A1- 0 722 917
- EP-A1- 0 894 811
- EP-A2- 0 753 488
- EP-A2- 1 182 179
- WO-A1-02/10229
- WO-A1-97/39037
- DE-A1- 10 061 410
- DE-A1- 19 513 126
- DE-A1- 19 926 611
- DE-B3- 10 315 865
- DATABASE WPI Week 198832 Thomson Scientific, London, GB; AN 1988-222692 XP002597887 & JP 63 156048 A (MITSUI TOATSU CHEM INC) 29. Juni 1988 (1988-06-29)

## Beschreibung

Hydraulisch abbindende Klebemörtel, auch bekannt als sogenannte zementäre Fliesenkleber, enthalten als Hauptbestandteile anorganische Bindemittel in Form von Zementen sowie Füllstoffe auf Basis von Quarz- und/oder Carbonat-haltigen Rohstoffen.

Des Weiteren sind in üblichen hydraulisch abbindenden Klebemörteln Zusatzmittel enthalten, welche die anwendungstechnischen und physikalischen Eigenschaften des erhärteten Klebemörtels verbessern sollen. So werden zum Beispiel durch Zugabe von Wasserretentionsmitteln, insbesondere in Form von Celluloseethern, die Verarbeitungseigenschaften in der Form optimiert, dass die Verdickungswirkung (Konsistenz) und das Wasserrückhaltevermögen erhöht und die Trockenhaftzugwerte deutlich verbessert werden.

Durch den Einsatz von organischen Bindemitteln zum Beispiel in Form von redispergierbaren Polymerisatpulvern oder flüssigen Polymerdispersionen wird den so genannten "Flexmörteln" eine gewisse Flexibilität verliehen. Durch diese Flexibilisierung lassen sich auch solche Untergründe mit starren Keramik- und Naturwerksteinplatten belegen, die sich mechanisch/thermisch verformen.

Darüber hinaus werden dem Klebemörtel noch weitere Additive wie Beschleuniger, Verzögerer, Luftporenbildner, Verarbeitungshilfsmittel (sowie ggf. Pigmente) zugegeben, um das Abbindeverhalten, die Verarbeitbarkeit sowie die physikalischen Eigenschaften der erhärteten Klebemörtel zu steuern.

Bekannt sind auch so genannte Leichtkleber, die zur Verbesserung des Verarbeitungsprofiles und zur Erniedrigung des Elastizitätsmoduls Leichtfüllstoffe enthalten.

So sind aus der DE-PS 103 15 865 Fliesenkleber bekannt, die neben den üblichen Bindemittel-Komponenten und (Leicht-)Füllstoffen noch 0,1 bis 10 Gew.-% einer Metakaolin-Komponente, bezogen auf das Gesamtgewicht der Fliesenkleber-Trockenmasse, enthalten.

Auf diese Weise konnten die Verbundfestigkeiten und insbesondere die Nasshaftzugfestigkeiten weiter verbessert werden.

Gemäß der EP-A 1 281 693 werden Mittelbettmörtel vorgeschlagen, welche insbesondere das Verlegen von großformatigen Bodenplatten, insbesondere schweren Naturwerksteinplatten, verbessern sollen. Der entsprechende Mörtel enthält Zuschläge aus dichtem Gestein sowie Leichtzuschlägen mit einem speziellen Kornband und in einer speziellen Menge sowie Zusatzmittel in Form von Wasserretentionsmitteln, Luftporenbildnern, Verzögerern, Beschleunigern sowie Verflüssigern auf Basis von sulfonierten Melaminharzen.

Die bisherigen Klebemörtel entsprechend dem Stand der Technik besitzen alle den Nachteil, dass sie gewisse Schwächen beim Bruchbild aufweisen, insbesondere bei der Verlegung von Feinsteinzeugbelägen, d. h. hochgebrannten Fliesen und Platten mit einer geringen Wasseraufnahme von < 2 Gew.-%. Ein gutes Bruchbild, d. h. ein hoher Anteil des Klebemörtels nach Abschlagen der Fliese auf der Rückseite des Belagsmaterials, weist für den Fachmann auf eine gute Verbundhaftung des Klebemörtels hin.

Weiter können bei ungünstigen Bedingungen (Witterung, Aufbau, Untergrund etc.) die bisher bekannten Klebemörtel, insbesondere bei der Verlegung von Keramik auf Balkonen und Terrassen zu so genannten Ausblühungen führen. Diese Ausblühungen kommen durch Eluation von Salzen aus dem Klebemörtel über die Fugen an die Fugenoberflächen zustande und führen zu unerwünschter Fleckenbildung.

DE 100 61 410 A1 offenbart ein hydraulisch abbindendes fließfähiges Mörtelsystem bestehend aus
a) 10 bis 30 Gew.-% Portlandzement, wobei 5 bis 15 Gew.-% durch Flugaschen ersetzt sein können,
b) 10 bis 30 Gew.-% Zusatzstoffe auf Basis von Gesteinsmehlen und/oder puzzolanischen und/oder latent hydraulischen Zusätzen,
c) 50 bis 74 Gew.-% Zuschlagstoffe mit einer Sieblinie von 20 bis 40% von 0,1 bis 0,5 mm, 20 bis 40% von 0,5 bis 1,0 mm und 40 bis 60% von 1,0 bis 8,0 mm,
d) 0,1 bis 5 Gew.-% polymere Fliessmittel auf Basis von ungesättigten Mono- und/oder Dicarbonsäure-Derivaten und Oxyalkylenglykol-Alkenylethern und/oder -estern,
e) 0,1 bis 5 Gew.-% Additive, ausgewählt aus der Gruppe Luftporenbildner, Beschleuniger, Verzögerer, Stabilisierungsmittel, Hydrophobierungsmittel, Schwundminderer, Schwundkompensationsmittel, Quell- oder Treibmittel, Dichtungsmittel, Nachbehandlungsmittel, Entschäumer und
f) 0 bis 10 Gew.-% einer Kunststoffdispersion und/oder eines redispergierbaren Polymerisatpulvers auf Basis von Vinyl-, Acryl- oder Polyurethan-Polymeren sowie als Rest Wasser enthält.

JP 63 156048 A offenbart Polymerdispersionen, die 2 bis 10 Gew.-% ungesättigte Monomere mit Hydroxylgruppen und 30 bis 98 Gew.-% Acrylsäurealkylester ohne Hydroxylgruppen einpolymerisiert enthalten und die im Wesentlichen frei sind von ungesättigten Carbonsäuren und Carbonsäureamiden. Der Einsatz dieser Polymerdispersionen erfolgt insbesondere im Bereich von Putzen.

Der vorliegenden Erfindung lag daher die Aufgabe zugrunde, einen Klebemörtel bereitzustellen, der die Nachteile des Standes der Technik nicht aufweist, sondern gute Verarbeitungseigenschaften und physikalische Eigenschaften, insbesondere im Hinblick auf das Bruchbild, aufweist.

Diese Aufgabe wurde erfindungsgemäß durch den Klebemörtel entsprechend Anspruch 1 gelöst.

Es hat sich nämlich überraschenderweise gezeigt, dass durch den Einsatz des polymeren Fließmittels auf Basis von ungesättigten Mono- oder Dicarbonsäuren bzw. Derivaten hiervon und Oxyalkylenglykol-Alkenylethern und/oder -estern die Verarbeitungseigenschaften, insbesondere längere Hautbildezeit und damit klebeoffene Zeit und die anwendungstechnischen Eigenschaften im Hinblick auf Bruchbild und Haftzugfestigkeit, insbesondere die offene Zeit nach DIN EN 12004, deutlich verbessert werden.
Außerdem neigt der erfindungsgemäße Klebemörtel weit weniger zu Ausblühungen, was ebenfalls nicht vorhersehbar war.

Der hydraulisch abbindende Klebemörtel entsprechend der vorliegenden Erfindung besteht aus insgesamt acht Komponenten. Im Folgenden bezieht sich Gew.-% auf das Gesamtgewicht des Klebemörtels.

Die Komponente A) besteht hierbei aus 10 bis 70 Gew.-% eines hydraulischen Bindemittels, welches insbesondere aus Portlandzement, insbesondere der Typen CEM I, II, III, IV und V, und/oder Tonerdezement (Aluminatzement) bestehen kann. Das hydraulische Bindemittel kann gegebenenfalls zusätzlich auch Kalk und/oder Gips beinhalten.

Die Komponente B) mit einem Anteil von 1 bis 70 Gew.-% besteht aus Zusatzstoffen auf Basis von puzzolanischen und/oder latent hydraulischen Zusätzen. Bei den puzzolanisch und/oder latent hydraulischen Zusätzen werden vorzugsweise Flugasche, Mikrosilika, Metakaolin, Zeolith, Trassmehl, Alumosilikat, Tuff, Phonolith, Diatomeenerde, amorph gefälltes Silica, Ölschiefer sowie Hochofenschlacke mit hauptsächlich nicht kristallinen Anteilen eingesetzt.

Bei den Füllstoffen (Komponente C)) mit einem Anteil von 10 bis 80 Gew.-% handelt es sich bevorzugt um Quarzsand, Kalksteinmehl, Kreide, Marmor, Ton, Mergel, Aluminiumoxid, Talkum, Schwerspat sowie Leichtfüllstoffe wie Mikrohohlkugeln auf synthetischer Basis wie z. B. aus Polymeren, Glas und Alumosilikaten wie z. B Perlithe, Blähton, Blähglas und/oder poröse Füllstoffe auf natürlicher Basis wie z. B. Mineralschaum, Bims, Schaumlava, Bläh-Vermiculit.

Es ist als erfindungswesentlich anzusehen, dass der erfindungsgemäße Klebemörtel 0,01 bis 5 Gew.-% eines polymeren Fließmittels (Komponente D)) auf Basis von ungesättigten Mono- und/oder Dicarbonsäuren oder Derivaten hiervon und Oxyalkylenalkohol-Alkenylethern und/oder -estern enthält. Bevorzugte Mono- und/oder Dicarbonsäuren bzw. Derivate hiervon sind Maleinsäure, Maleinsäureanhydrid, Maleinsäureimid, Maleinsäuremonoamid, Acrylsäure, Methacrylsäure, Itaconsäure, Itaconsäureanhydrid, Itaconsäureimid, Itaconsäuremonoamid sowie Salze der obigen Säuren (insbesondere Alkal-, Erdalkali- und Ammoniumsalze).

Im Folgenden bezieht sich Mol-% auf die Gesamtmolmasse des polymeren Fließmittels.

Gemäß einer bevorzugten Ausführungsform ist das entsprechende polymere Fließmittel aufgebaut aus
a) 10 bis 90 Mol-% Maleinsäure und/oder Maleinsäureanhydrid
b) 1 bis 89 Mol-% eines Oxyalkylenglykol-Alkenylethers sowie
c) 0,1 bis 10 Mol-% einer vinylischen Polyalkylenglykol-, Polysiloxan- oder Ester-Verbindung.

Derartige Co- oder Terpolymere sind bereits bekannt und zum Beispiel in der EP 0 736 553 B1 sowie DE 195 13 126 A1 beschrieben.

Des Weiteren werden vorzugsweise polymere Fließmittel verwendet, die aufgebaut sind aus
a) 51 bis 95 Mol-% eines Monomers ausgewählt aus der Gruppe Acrylsäure, Methacrylsäure, Itaconsäure und einem Itaconsäure-Derivat,
b) 1 bis 48,9 Mol-% eines Oxyalkylenglykol-Alkenylethers,
c) 0,1 bis 5 Mol-% einer vinylischen Polyalkylenglykol-, Polysiloxan- oder Ester-Verbindung sowie
d) 0 bis 47,9 Mol-% Maleinsäure und/oder Maleinsäureanhydrid.
Im Hinblick auf die obige Komponente a) sind bevorzugte Itaconsäure-Derivate gegeben durch Itaconsäureanhydrid, Itaconsäureimid und Itaconsäuremonoamid sowie Salze der Itaconsäure (insbesondere Alkali-, Erdalkali- und Ammoniumsalze).

Derartige Co- oder Terpolymere sind zum Beispiel in der EP 1 189 955 B1 bzw. DE 199 26 611 A1 beschrieben.

Schließlich können auch als Komponente D) im Rahmen der vorliegenden Erfindung polymere Fließmittel eingesetzt werden, die aus folgenden Komponenten aufgebaut sind:
a) 5 bis 90 Mol-% Maleinsäure (Ia) und/oder Maleinsäureanhydrid (Ib) und/oder (Meth-)Acrylsäure (Ic)
b) 10 bis 95 Mol-% eines Oxyalkylenglykol-Alkenylethers (IIa) und/oder -esters (IIb)
c) 0 bis 80 Mol-% N-Vinyl-pyrrolidon (IIIa) und/oder eines Maleinsäurehalbamids (IIIb) und/oder Styrol (IIIc)

Aus der Gruppe dieser Copolymere haben sich folgende Verbindungen als besonders vorteilhaft erwiesen:
1) Copolymere mit 5 bis 55 Mol-% Monomere (Ia) und/oder (Ib), 15 bis 65 Mol-% Monomere (IIa) und 30 bis 80 Mol-% Monomere (IIb).
2) Copolymere mit 50 bis 85 Mol-% Monomere (Ia) und/oder (Ic) sowie 15 bis 50 Mol-% Monomere (IIa) und/oder (IIb).
3) Copolymere mit 10 bis 35 Mol-% Monomere (Ia) und/oder (Ib), 15 bis 40 Mol-% Monomere (IIa) sowie 50 bis 75 Mol-% Monomere (IIIc).

Diese Polymere sind zum Beispiel aus der WO 97/39 037, EP 894 811 A1, DE 199 26 611 A1 sowie EP 753 488 bekannt und besitzen ein bevorzugtes mittleres Molekulargewicht Mn von 5000 bis 100 000 g/mol.

Des Weiteren sind im erfindungsgemäßen Klebemörtel 0,01 bis 15 Gew.-% eines redispergierbaren Polymerisatpulvers und/oder einer Kunststoffdispersion (Komponente E)) auf Basis von Vinyl- oder Acrylat-Polymeren enthalten. Vorzugsweise werden hierbei Polymerisate auf der Basis von einem oder mehreren der Monomere Styrol, Butadien, Vinylacetat, Vinylversatat, Vinylpropionat, Vinyllaurat, Vinylchlorid, Vinylidenchlorid, Ethylen, Acrylate in Form ihrer Homo-, Co- oder Terpolymerisate eingesetzt.

Als weitere erfindungswesentliche Komponente F) enthält der erfindungsgemäße Klebemörtel 0,01 bis 10 Gew.-% eines Wasserretentionsmittels, wobei auf die üblichen Celluloseether und/oder Stärkeether zurückgegriffen werden kann. Bevorzugt hierbei sind wasserlösliche, nicht-ionische Cellulose-Derivate, wie Methylcellulose (MC), Hydroxyethylcellulose (HEC), Methylhydroxyethylcellulose (MHEC), Methylhydroxypropylcellulose (MHPC). Aber auch mikrobiell erzeugte Polysaccharide wie Welan Gum und natürlich vorkommende extraktiv isolierte Polysaccharide (Hydrocolloide) wie Alginate, Xanthane, Carrageenane, Galactomannane werden entsprechend dem Stand der Technik als übliche Wasserretentionsmittel eingesetzt.

Daneben ist es im Rahmen der vorliegenden Erfindung auch möglich, als Wasserretentionsmittel wasserlösliche oder wasserquellbare Sulfogruppen-haltige assoziativverdickende Copolymere einzusetzen wie sie zum Beispiel in der WO 02/10 229 A1 sowie DE 198 06 482 A1 beschrieben sind. Außerdem können natürlich ohne weiteres auch Polyurethan/Polyether-Polymerisate entsprechend dem Stand der Technik verwendet werden.

Schließlich enthält der erfindungsgemäße Klebemörtel neben der üblichen Menge Wasser (Komponente H)) 0,01 bis 5 Gew.-% an sonstigen Additiven (Komponente G)) ausgewählt aus der Gruppe Beschleuniger, Verzögerer, Verdicker, Dispergiermittel, Farbpigmente, Reduktionsmittel, Luftporenbildner und Verarbeitungshilfsmittel, wobei auf die üblichen Verbindungen entsprechend dem Stand der Technik zurückgegriffen werden kann.

Die Herstellung des erfindungsgemäßen Klebemörtels ist relativ unproblematisch und kann mit den üblichen Methoden erfolgen. Vorzugsweise werden die pulverförmigen Bestandteile homogen vermischt und die Flüssigkomponenten unmittelbar vor der Verarbeitung zugegeben.

Der erfindungsgemäße Klebemörtel eignet sich hervorragend für die Verlegung von Keramik- und/oder Naturwerksteinbelägen und insbesondere für die Verlegung von Feinsteinzeugbelägen.

Der erfindungsgemäße Klebemörtel weist hierbei hervorragende Verarbeitungseigenschaften (wie z. B. Aufziehverhalten, Korrigierbarkeit, klebeoffene Zeit) sowie sehr gute physikalische Eigenschaften (insbesondere Bruchbild und Haftzugfestigkeiten) auf. Außerdem werden beim erfindungsgemäßen Klebemörtel keine Ausblühungen beobachtet.

Die nachfolgenden Beispiele sollen die vorliegende Erfindung näher erläutern.

### Beispiele

### Beispiel 1 (Vergleich)

| | |
|---|---|
| Quarzsand 0 bis 0,5 mm | 58,10 Gew.-% |
| Portlandzement Milke CEM I 52,5 R | 35,00 Gew.-% |
| Metakaolin | 3,00 Gew.-% |
| Dispersionspulver (Copolymer auf Basis von Vinylacetat/Ethylen) | 3,50 Gew.-% |
| Synthetisches Wasserretentionsmittel ¹⁾ | 0,35 Gew.-% |
| Celluloseether Culminal MHPC 20.000 p (MHPC) | 0,05 Gew.-% |
| Wasser 250 g/kg Pulver | |

### Beispiel 2 (Erfindung)

| | |
|---|---|
| Quarzsand 0 bis 0,5 mm | 58,02 Gew.-% |
| Portlandzement Milke CEM I 52,5 R | 35,00 Gew.-% |
| Metakaolin | 3,00 Gew.-% |
| Dispersionspulver (Copolymer auf Basis von Vinylacetat/Ethylen) | 3,50 Gew.-% |
| Synthetisches Wasserretentionsmittel ¹⁾ | 0,35 Gew.-% |
| Celluloseether Culminal MHPC 20.000 p (MHPC) | 0,05 Gew.-% |
| Polymeres Fließmittel Melflux 1641F ²⁾ | 0,08 Gew.-% |
| Wasser 250 g/kg Pulver | |

### Beispiel 3 (Erfindung)

| | |
|---|---|
| Quarzsand 0 bis 0,5 mm | 57,97 Gew.-% |
| Portlandzement Milke CEM 152,5 R | 35,00 Gew.-% |
| Metakaolin | 3,00 Gew.-% |
| Dispersionspulver | 3,50 Gew.-% |
| (Copolymer auf Basis von Vinylacetat/Ethylen) Synthetisches Wasserretentionsmittel¹⁾ | 0,35 Gew.-% |
| Celluloseether Culminal MHPC 20.000 p (MHPC) | 0,05 Gew.-% |
| Polymeres Fließmittel Melflux 1641F ²⁾ | 0,13 Gew.-% |
| Wasser 250 g/kg Pulver | |

| | |
|---|---|
| ¹⁾ gemäß Beispiel 6 der WO 02/10 229 | |
| ²⁾ Verkaufsprodukt der Degussa Construction Chemicals GmbH | |

Die anwendungstechnischen und physikalischen Eigenschaften der Klebemörtel der Beispiele 1 bis 3 sind in Tabelle 1 zusammengestellt.

**Tabelle 1**

| | Beispiel 1 | Beispiel 2 | Beispiel 3 |
|---|---|---|---|
| Korrigierbarkeit | gut | sehr gut | sehr gut |
| Klebeoffene Zeit | gut | sehr gut | sehr gut |
| Hautbildung | 30 min. | 40 min. | 35 min. |
| Bruchbild nach Abschlagen der Fliesen | 40 % Benetzung der Fliesenrückseite | 60 % Benetzung der Fliesenrückseite | 80 % Benetzung der Fliesenrückseite |
| Haftzugfestigkeiten in Anlehnung an DIN EN-Norm 28 d Trockenlagerung | 1.9 N/mm² | 2,1 N/mm² | 2,3 N/mm² |
| Haftzugfestigkeiten in Anlehnung an DIN EN-Norm Offene Zeit 30 Min. | 0,6 N/mm² | 1,3 N/mm² | 1,6 N/mm² |

### Beispiel 4 (Erfindung)

| | |
|---|---|
| Quarzsand 0 bis 0,5 mm | 60,83 Gew.-% |
| Portlandzement CEM II AS 42,5 R | 29,00 Gew.-% |
| Metakaolin | 6,00 Gew.-% |
| Dispersionspulver (Copolymer auf Basis von Vinylacetat/-versatat) | 3,30 Gew.-% |
| Celluloseether Culminal MHPC 20.000 p (MHPC) | 0,40 Gew.-% |
| Beschleuniger (Calciumformiat) | 0,40 Gew.-% |
| Polymeres Fließmittel Melflux 1643¹⁾ | 0,07 Gew.-% |
| Wasser 250 g/kg Pulver | |

| | |
|---|---|
| ¹⁾ Verkaufsprodukt der Degussa Construction Chemicals GmbH | |

### Beispiel 5 (Vergleich)

| | |
|---|---|
| Quarzsand 0 bis 0,5 mm | 60,90 Gew.-% |
| Portlandzement CEM II AS 42,5 R | 29,00 Gew.-% |
| Metakaolin | 6,00 Gew.-% |
| Dispersionspulver (Copolymer auf Basis von Vinylacetat/-versatat) | 3,30 Gew.-% |
| Celluloseether Culminal MHPC 20.000 p (MHPC) | 0,40 Gew.-% |
| Beschleuniger (Calciumformiat) | 0,40 Gew.-% |
| Wasser 250 g/kg Pulver | |

Es wurden mit Folienabdichtung versehene Betonplatten 80X120 cm mit den Klebemörteln nach Beispiel 4 und 5 mittels Zahntraufel aufgetragen und mit Feinsteinzeugfliesen belegt. Nach 1 Tag wurden die Fugen der jeweiligen Platten mit PCI-Flexfuge verfugt.

Nach einem weiteren Tag Lagerung wurden die so aufgebauten Prüfkörper mit einem Neigungswinkel von 45° einer Freibewitterung ausgesetzt. Nach 18 bis 24 Monaten wurden die Ausblühungen auf den trockenen Fugenoberflächen visuell geprüft.

### Ergebnis:

Beispiel 4 Klebemörtel keine Ausblühungen.

Beispiel 5 Klebemörtel starke Ausblühungen.

### Beispiel 6 (Vergleich)

| | |
|---|---|
| Quarzsand 0 bis 0,5 mm | 47,24 Gew.-% |
| Portlandzement CEM I 52,5 R | 36,60 Gew.-% |
| Metakaolin | 7,20 Gew.-% |
| Dispersionspulver (Copolymer auf Basis von Vinylacetat/Ethylen) | 3,00 Gew.-% |
| Celluloseether Culminal MHPC 20.000 p (MHPC) | 0,60 Gew.-% |
| Beschleuniger (Calciumformiat) | 0,60 Gew.-% |
| Hydroxypropylstärkeether | 0,06 Gew.-% |
| Kalksteinmehl | 4,10 Gew.-% |
| Cellulosefaser | 0,60 Gew.-% |
| Wasser 360g/kg Pulver | |

### Beispiel 7 (Erfindung)

| | |
|---|---|
| Quarzsand 0 bis 0,5 mm | 47,21 Gew.-% |
| Portlandzement CEM I 52,5 R | 36,60 Gew.-% |
| Metakaolin | 7,20 Gew.-% |
| Dispersionspulver (Copolymer auf Basis von Vinylacetat/Ethylen) | 3,00 Gew.-% |
| Celluloseether Culminal MHPC 20.000 p (MHPC) | 0,60 Gew.-% |
| Beschleuniger (Calciumformiat) | 0,60 Gew.-% |
| Hydroxypropylstärkeether | 0,06 Gew.-% |
| Kalksteinmehl | 4,10 Gew.-% |
| Cellulosefaser | 0,60 Gew.-% |
| Polymeres Fließmittel Melcret 2651¹⁾ | 0,03 Gew.-% |
| Wasser 360g/kg Pulver | |

| | |
|---|---|
| ¹⁾ Verkaufsprodukt der Degussa Construction Chemicals GmbH | |

### Nasshaftzugwerte in Anlehnung an DIN EN 12004:

| | |
|---|---|
| Beispiel 6 | 0,8 N/mm² |
| Beispiel 7 | 1,0 N/mm² |

Offene Zeit in Anlehnung an DIN EN 12004 30 Min.

| | |
|---|---|
| Beispiel 6 (Vergleich) | 0,3 N/mm² |
| Beispiel 7 (Erfindung) | 0,9 N/mm² |

## Patentansprüche

1. Hydraulisch abbindender Klebemörtel bestehend aus
A) 10 bis 70 Gew.-% eines hydraulischen Bindemittels,
B) 1 bis 70 Gew.-% Zusatzstoffen auf Basis von puzzolanischen und/oder latent hydraulischen Zusätzen,
C) 10 bis 80 Gew.-% Füllstoffen,
D) 0,01 bis 5 Gew.-% eines polymeren Fließmittels auf Basis von ungesättigten Mono- und/oder Dicarbonsäuren oder Derivaten hiervon und Oxyalkylenglykol-Alkenylethern und/oder -estern,
E) 0,01 bis 15 Gew.-% eines redispergierbaren Polymerisatpulvers und/oder einer Kunststoffdispersion auf Basis von Vinyl- oder Acrylat-Polymeren,
F) 0,01 bis 10 Gew.-% eines Wasserretentionsmittels,
G) 0,01 bis 5 Gew.-% von sonstigen Additiven ausgewählt aus der Gruppe Beschleuniger, Verzögerer, Verdicker, Dispergiermittel, Farbpigmente, Reduktionsmittel, Luftporenbildner und Verarbeitungshilfsmittel sowie
H) als Rest Wasser.

2. Klebemörtel nach Anspruch 1, **dadurch gekennzeichnet, dass** das hydraulische Bindemittel aus Portlandzement, insbesondere ausgewählt aus den Typen CEM I, II, III, IV und V, und/oder Tonerdezement (Aluminatzement) besteht.

3. Klebemörtel nach einem der Ansprüche 1 bis 2, **dadurch gekennzeichnet, dass** die puzzolanischen und/oder latent hydraulischen Zusätze aus Flugasche, Mikrosilika, Metakaolin, Zeolith, Ölschiefer, Trassmehl, Alumosilikat, Tuff, Phonolith, Diatomeenerde, amorph gefälltes Silica sowie Hochofenschlacke mit hauptsächlich nicht kristallinen Anteilen ausgewählt sind.

4. Klebemörtel nach einem der Ansprüche 1 bis 3, **dadurch gekennzeichnet, dass** als Füllstoffe Quarzsand, Kalksteinmehl, Kreide, Marmor, Ton, Mergel, Aluminiumoxid, Talkum, Schwerspat, Leichtfüllstoffe und/oder poröse Füllstoffe auf natürlicher Basis eingesetzt werden.

5. Klebemörtel nach einem der Ansprüche 1 bis 4, **dadurch gekennzeichnet, dass** das polymere Fließmittel aufgebaut ist aus
a) 10 bis 90 Mol-% Maleinsäure und/oder Maleinsäureanhydrid,
b) 1 bis 89 Mol-% eines Oxyalkylenglykol-Alkenylethers sowie
c) 0,1 bis 10 Mol-% einer vinylischen Polyalkylenglykol-, Polysiloxan- oder Ester-Verbindung.

6. Klebemörtel nach einem der Ansprüche 1 bis 4, **dadurch gekennzeichnet, dass** das polymere Fließmittel aufgebaut ist aus
a) 51 bis 95 Mol-% eines Monomers ausgewählt aus der Gruppe Acrylsäure, Methacrylsäure, Itaconsäure und einem Itaconsäure-Derivat,
b) 1 bis 48,9 Mol-% eines Oxyalkylenglykol-Alkenylethers,
c) 0,1 bis 5 Mol-% einer vinylischen Polyalkylenglykol-, Polysiloxan- oder Ester-Verbindung sowie
d) 0 bis 47,9 Mol-% Maleinsäure und/oder Maleinsäureanhydrid.

7. Klebemörtel nach einem der Ansprüche 1 bis 4, **dadurch gekennzeichnet, dass** das polymere Fließmittel aus
a) 5 bis 90 Mol-% Maleinsäure (Ia) und/oder Maleinsäureanhydrid (Ib) und/oder (Meth-)Acrylsäure (Ic)
b) 10 bis 95 Mol% eines Oxyalkylenglykol-Alkenylethers (IIa) und/oder - esters (IIb) sowie
c) 0 bis 80 Mol-% N-Vinylpyrrolidon (IIIa) und/oder eines Maleinsäurehalbamids (IIIb) und/oder Styrol (IIIc)
besteht.

8. Klebemörtel nach Anspruch 7, **dadurch gekennzeichnet, dass** das polymere Fließmittel aufgebaut ist aus 5 bis 55 Mol% der Monomere (Ia) und/oder (Ib), 15 bis 65 Mol-% der Monomere (IIa) und 30 bis 80 Mol-% der Monomere (IIb).

9. Klebemörtel nach Anspruch 7, **dadurch gekennzeichnet, dass** das polymere Fließmittel aufgebaut ist aus 50 bis 85 Mol-% der Monomere (Ia) und/oder (Ic) sowie 15 bis 50 Mol% der Monomere (IIa) und/oder (IIb).

10. Klebemörtel nach Anspruch 7, **dadurch gekennzeichnet, dass** das polymere Fließmittel aufgebaut ist aus 10 bis 35 Mol-% der Monomere (Ia) und/oder (Ib), 15 bis 40 Mol-% der Monomere (IIa) sowie 50 bis 75 Mol% der Monomere (IIIc).

11. Klebemörtel nach einem der Ansprüche 1 bis 10, **dadurch gekennzeichnet, dass** als redispergierbares Polymerisatpulver und/oder Kunststoffdispersion ein Polymerisat auf der Basis von einem oder mehreren der Monomere Styrol, Butadien, Vinylacetat, Vinylversatat, Vinylpropionat, Vinyllaurat, Vinylchlorid, Vinylidenchlorid, Ethylen, Acrylate in Form ihrer Homo-, Co- oder Terpolymerisate eingesetzt werden.

12. Klebemörtel nach einem der Ansprüche 1 bis 11, **dadurch gekennzeichnet, dass** als Wasserretentionsmittel Celluloseether und/oder Stärkeether eingesetzt werden.

13. Klebemörtel nach einem der Ansprüche 1 bis 12, **dadurch gekennzeichnet, dass** als Wasserretentionsmittel wasserlösliche oder wasserquellbare Sulfogruppenhaltige assoziativverdickende Copolymere und/oder Polyurethan/Polyether-Polymerisate verwendet werden.

14. Verfahren zur Herstellung des hydraulisch abbindenden Klebemörtels nach einem der Ansprüche 1 bis 13, **dadurch gekennzeichnet, dass** die pulverförmigen Bestandteile homogen gemischt und die Flüssigkomponenten unmittelbar vor der Verarbeitung zugegeben werden.

15. Verwendung des Klebemörtels nach einem der Ansprüche 1 bis 13 für die Verlegung von Keramik- und/oder Naturwerksteinbelägen.

16. Verwendung nach Anspruch 15, **dadurch gekennzeichnet, dass** der Klebemörtel für die Verlegung von Feinsteinzeugbelägen eingesetzt wird.

## Claims

1. A hydraulically setting adhesive mortar comprising
A) from 10 to 70% by weight of a hydraulic binder,
B) from 1 to 70% by weight of additives based on pozzolanic and/or latently hydraulic additives,
C) from 10 to 80% by weight of fillers,
D) from 0.01 to 5% by weight of a polymeric plasticizer based on unsaturated monocarboxylic and/or dicarboxylic acids or derivatives thereof and oxyalkylene glycol alkenyl ethers and/or esters,
E) from 0.01 to 15% by weight of a redispersible polymer powder and/or a polymer dispersion based on vinyl or acrylate polymers,
F) from 0.01 to 10% by weight of a water retention agent,
G) from 0.01 to 5% by weight of other additives selected from the group consisting of accelerators, retarders, thickeners, dispersants, color pigments, reducing agents, air pore formers and processing aids and also
H) water as balance.

2. The adhesive mortar according to claim 1, wherein the hydraulic binder consists of portland cement, in particular selected from the types CEM I, II, III, IV and V, and/or high-alumina cement (aluminate cement).

3. The adhesive mortar according to either claim 1 or 2, wherein the pozzolanic and/or latently hydraulic additives are selected from among fly ash, microsilica, metakaolin, zeolite, oil shale, ground trass, aluminosilicate, tuff, phonolite, diatomaceous earth, amorphous precipitated silica and blast furnace slag comprising mainly noncrystalline material.

4. The adhesive mortar according to any of claims 1 to 3, wherein silica sand, ground limestone, chalk, marble, clay, marl, aluminum oxide, talc, barite, lightweight fillers and/or porous fillers based on natural materials are used as fillers.

5. The adhesive mortar according to any of claims 1 to 4, wherein the polymeric plasticizer is made up of
a) from 10 to 90 mol% of maleic acid and/or maleic anhydride,
b) from 1 to 89 mol% of an oxyalkylene glycol alkenyl ether and
c) from 0.1 to 10 mol% of a vinylic polyalkylene glycol, polysiloxane or ester compound.

6. The adhesive mortar according to any of claims 1 to 4, wherein the polymeric plasticizer is made up of
a) from 51 to 95 mol% of a monomer selected from the group consisting of acrylic acid, methacrylic acid, itaconic acid and an itaconic acid derivative,
b) from 1 to 48.9 mol% of an oxyalkylene glycol alkenyl ether,
c) from 0.1 to 5 mol% of a vinylic polyalkylene glycol, polysiloxane or ester compound and
d) from 0 to 47.9 mol% of maleic acid and/or maleic anhydride.

7. The adhesive mortar according to any of claims 1 to 4, wherein the polymeric plasticizer comprises
a) from 5 to 90 mol% of maleic acid (Ia) and/or maleic anhydride (Ib) and/or (meth)acrylic acid (Ic)
b) from 10 to 95 mol% of an oxyalkylene glycol alkenyl ether (IIa) and/or ester (IIb) and
c) from 0 to 80 mol% of an N-vinylpyrrolidone (IIIa) and/or a maleic acid monoamide (IIIb) and/or styrene (IIIc).

8. The adhesive mortar according to claim 7, wherein the polymeric plasticizer is made up of from 5 to 55 mol% of the monomers (Ia) and/or (Ib), from 15 to 65 mol% of the monomers (IIa) and from 30 to 80 mol% of the monomers (IIb).

9. The adhesive mortar according to claim 7, wherein the polymeric plasticizer is made up of from 50 to 85 mol% of the monomers (Ia) and/or (Ic) and from 15 to 50 mol% of the monomers (IIa) and/or (IIb).

10. The adhesive mortar according to claim 7, wherein the polymeric plasticizer is made up of from 10 to 35 mol% of the monomers (Ia) and/or (Ib), from 15 to 40 mol% of the monomers (IIa) and from 50 to 75 mol% of the monomers (IIIc).

11. The adhesive mortar according to any of claims 1 to 10, wherein a polymer based on one or more of the monomers styrene, butadiene, vinyl acetate, vinyl versatate, vinyl propionate, vinyl laurate, vinyl chloride, vinylidene chloride, ethylene, acrylates in the form of their homopolymers, copolymers or terpolymers is used as redispersible polymer powder and/or polymer dispersion.

12. The adhesive mortar according to any of claims 1 to 11, wherein cellulose ethers and/or starch ethers are used as water retention agents.

13. The adhesive mortar according to any of claims 1 to 12, wherein water-soluble or water-swellable sulfo group-comprising associatively thickening copolymers and/or polyurethane/polyether polymers are used as water retention agents.

14. A process for producing the hydraulically setting adhesive mortar according to any of claims 1 to 13, wherein the pulverulent constituents are homogeneously mixed and the liquid components are added immediately before processing.

15. The use of the adhesive mortar according to any of claims 1 to 13 for laying of ceramic and/or natural stone surfaces.

16. The use according to claim 15, wherein the adhesive mortar is used for the laying of fine stoneware surfaces.

## Revendications

1. Ciment-colle à prise hydraulique, constitué par
A) 10 à 70% en poids d'un liant hydraulique,
B) 1 à 70% en poids d'adjuvants à base d'additifs pouzzolaniques et/ou hydrauliques latents,
C) 10 à 80% en poids de charges,
D) 0,01 à 5% en poids d'un fluidifiant polymère à base d'acides monocarboxyliques et/ou dicarboxyliques insaturés ou de dérivés de ceux-ci et d'oxyalkylèneglycol-alcényléthers et/ou d'esters alcényliques d'oxyalkylèneglycol,
E) 0,01 à 15% en poids d'une poudre polymère redispersible et/ou d'une dispersion de matériau synthétique à base de polymères de vinyle ou d'acrylate,
F) 0,01 à 10% en poids d'un agent de rétention d'eau,
G) 0,01 à 5% en poids d'autres additifs choisis dans le groupe formé par les accélérateurs, les retardateurs, les épaississants, les dispersants, les pigments colorés, les réducteurs, les agents de formation de pores d'air et les adjuvants de transformation, ainsi que
H) de l'eau pour le reste.

2. Ciment-colle selon la revendication 1, **caractérisé en ce que** le liant hydraulique est constitué de ciment Portland, en particulier choisi parmi les types CEM I, II, III, IV et V, et/ou de ciment fondu (ciment alumineux).

3. Ciment-colle selon l'une quelconque des revendications 1 à 2, **caractérisé en ce que** les additifs pouzzolaniques et/ou hydrauliques latents sont choisis parmi les cendres volantes, les microsilices, le métakaolin, la zéolithe, le schiste bitumeux, la farine de trass, l'aluminosilicate, le tuf, la phonolithe, les terres de diatomées, la silice précipitée amorphe ainsi que les scories de haut fourneau présentant principalement des proportions non cristallines.

4. Ciment-colle selon l'une quelconque des revendications 1 à 3, **caractérisé en ce qu'**on utilise, comme charges, du sable de quartz, de la farine de calcaire, de la craie, du marbre, de l'argile, de la marne, de l'oxyde d'aluminium, du talc, du sulfate de baryum, des charges légères et/ou des charges poreuses à base naturelle.

5. Ciment-colle selon l'une quelconque des revendications 1 à 4, **caractérisé en ce que** le fluidifiant polymère est formé à partir de
a) 10 à 90% en mole d'acide maléique et/ou d'anhydride de l'acide maléique,
b) 1 à 89% en mole d'un oxyalkylèneglycolalcényléther, ainsi que de
c) 0,1 à 10% en mole d'un composé vinylique de polyalkylèneglycol, de polysiloxane ou d'ester.

6. Ciment-colle selon l'une quelconque des revendications 1 à 4, **caractérisé en ce que** le fluidifiant polymère est formé à partir de
a) 51 à 95% en mole d'un monomère choisi dans le groupe formé par l'acide acrylique, l'acide méthacrylique, l'acide itaconique et un dérivé d'acide itaconique,
b) 1 à 48,9% en mole d'un oxyalkylèneglycolalcényléther,
c) 0,1 à 5% en mole d'un composé vinylique de polyalkylèneglycol, de polysiloxane ou d'ester ainsi que de
d) 0 à 47,9% en mole d'acide maléique et/ou d'anhydride de l'acide maléique.

7. Ciment-colle selon l'une quelconque des revendications 1 à 4, **caractérisé en ce que** le fluidifiant polymère est constitué par
a) 5 à 90% en mole d'acide maléique (Ia) et/ou d'anhydride de l'acide maléique (Ib) et/ou d'acide (méth)acrylique (Ic).
b) 10 à 95% en mole d'un oxyalkylèneglycolalcényléther (IIa) et/ou d'un ester alcénylique d'oxyalkylèneglycol (IIb)
c) 0 à 80% en mole de N-vinylpyrrolidone (IIIa) et/ou d'un semi-amide de l'acide maléique (IIIb) et/ou de styrène (IIIc).

8. Ciment-colle selon la revendication 7, **caractérisé en ce que** le fluidifiant polymère est formé à partir de 5 à 55% en mole des monomères (Ia) et/ou (Ib), de 15 à 65% en mole des monomères (IIa) et de 30 à 80% en mole des monomères (IIb).

9. Ciment-colle selon la revendication 7, **caractérisé en ce que** le fluidifiant polymère est formé à partir de 50 à 85% en mole des monomères (Ia) et/ou (Ic) ainsi que de 15 à 50% en mole des monomères (IIa) et/ou (IIb).

10. Ciment-colle selon la revendication 7, **caractérisé en ce que** le fluidifiant polymère est formé à partir de 10 à 35% en mole des monomères (Ia) et/ou (Ib), de 15 à 40% en mole des monomères (IIa) ainsi que de 50 à 75% en mole des monomères (IIIc).

11. Ciment-colle selon l'une quelconque des revendications 1 à 10, **caractérisé en ce qu'**on utilise, comme poudre polymère redispersible et/ou comme dispersion de matériau synthétique, un polymère à base d'un ou de plusieurs des monomères styrène, butadiène, acétate de vinyle, versatate de vinyle, propionate de vinyle, laurate de vinyle, chlorure de vinyle, chlorure de vinylidène, éthylène, acrylates sous forme de leurs homopolymères, copolymères ou terpolymères.

12. Ciment-colle selon l'une quelconque des revendications 1 à 11, **caractérisé en ce qu'**on utilise, comme agent de rétention de l'eau, des éthers de cellulose et/ou d'amidon.

13. Ciment-colle selon l'une quelconque des revendications 1 à 12, **caractérisé en ce qu'**on utilise, comme agent de rétention de l'eau, des copolymères épaississant par association, contenant des groupes sulfo, solubles ou gonflables dans l'eau et/ou des polymères de polyuréthane/polyéther.

14. Procédé pour la préparation du ciment-colle à prise hydraulique selon l'une quelconque des revendications 1 à 13, **caractérisé en ce qu'**on mélange les constituants sous forme de poudre de manière homogène et on ajoute les composants liquides directement avant la transformation.

15. Utilisation du ciment-colle selon l'une quelconque des revendications 1 à 13 pour la pose de revêtements céramiques et/ou en pierre de taille.

16. Utilisation selon la revendication 15, **caractérisée en ce que** le ciment-colle est utilisé pour la pose de revêtements en grès cérame fin.
